# EUROPEAN PATENT APPLICATION

(11) **EP 0 925 999 A2**
(43) Date of publication of application: **30.06.1999**
(21) Application number: 98310225.2
(22) Date of filing: 14.12.1998
(51) Int. Cl.: B60P 1/64

(54) **Container rear-end guidance and locking apparatus for a vehicle having a load handling system**

(30) Priority: 16.12.1997 GB 9726623
(71) Applicant: Partek Cargotec Limited, Shrewsbury SY1 3AG (GB)
(72) Inventor: Holroyd, Carl Justin, Shrewsbury, Shropshire SY3 7EF (GB); Locker, Steven William, Stramshall, Staffordshire ST14 5DL (GB); Wouw, Ad van de, 5527 BR Hapert (NL)
(74) Representative: Price, Paul Anthony King

(57) **Abstract**

The apparatus (13) comprises a frame (22) carrying a pair of container support members (15). During loading of an ISO container (14), the lower side rails (31) of the container are supported along long lengths thereof to prevent their being damaged. When loading has been completed, pistons (23) are used to pivot the frame (22) backwards [see Fig. 8] so that the rear corner castings (21) of the container drop onto seats (19) recessed into the middles of the container support members (15) and are locked down by twistlocks (20). Thus the weight of the container is no longer carried by the rollers (161-163, 171-173) of the container support members (15) and therefore, during rough cross-country transit, the lower side rails (31) of the container will not suffer impact damage caused by the rollers.

## Description

The invention relates to apparatus for guiding and locking the rear-end of a container lifted onto a vehicle by a load handling system of the hook-lift type.

There are many known designs of vehicles with load handling systems of a variety of different hook-lift types. In one known arrangement, a military vehicle with cross-country capability has a load handling system which is arranged to load and unload over the rear-end of the vehicle chassis a so-called NATO standard flatrack (a flat platform with an A-shaped frame at the front end with a bar which is engaged by the hook of the load handling system). The underside of the flatrack has a pair of strong central longitudinal rails which are designed to run over a pair of rollers at the rear end of the vehicle chassis during loading and unloading. The chassis has jaws which engage locking pegs on the rails in order to lock the flatrack to the chassis during transit.

Having specifically designed the vehicle with its load handling system to be suited to flatracks, there has in recent years been a desire to give the vehicle a secondary capability of handling ISO freight containers of which many millions are in day to day use around the world. In particular, the military has a requirement that the vehicle should have a secondary capability to handle 20-foot ISO containers.

The relevant ISO standard is ISO 668 which requires that all handling and locking of the container should be via its corner castings. To provide the secondary capability to the vehicle, it is known to use a detachable front frame which may be fitted to the front end of an ISO container and which has a bar which can engage with the hook of the load handling system. Unlike a flatrack, the underside of an ISO container is not specifically designed to be dragged over the rear end of a vehicle chassis. It has no strong central rails like the flatrack, but the ISO container does have side rails at its outer lower side regions which have proved, in practice, to be capable, if carefully handled, of supporting the ISO container as it is dragged up and over the rear end of the vehicle. Thus, in addition to the detachable front frame, it is known to provide at the rear end of the vehicle a pair of guidance and locking assemblies which are spaced apart by the distance between the side rails of an ISO container. These assemblies pivot during the loading of the ISO container to accommodate the changing angle of the side rails. The assemblies eventually end up generally horizontal when loading has been completed, and they incorporate standard twistlocks, for then locking down the rear lower corner castings of the ISO container.

Because the rear assemblies have to be placed at outboard positions at the rear of the vehicle chassis, unlike the inboard positioning of the two rollers which are provided for guiding the central rails under a flatrack, the two rear assemblies are in close proximity to the rear wheels of the vehicle. They must be positioned so as not to impede the suspension movement of the rear wheels, and this suspension movement can be particularly large for a military vehicle having cross-country capability. Also, the assemblies must be capable of being positioned so as not to interfere with the loading and unloading of a flatrack, which is after all the primary function of the vehicle. The most demanding clearance problems arise during the first part of a flatrack loading when the front end of the flatrack is being lifted up over the rear end of the vehicle to make initial contact with the pair of rollers which will support and guide the rails under the flatrack during the rest of the loading movement. The problem is particularly acute if there is slight angular mis-alignment between the longitudinal axis of the vehicle and the longitudinal axis of the flatrack sitting on the ground. Under these circumstances, one front corner of the flatrack can approach very close to the corresponding one of the rear guidance and locking assemblies.

All commercial and military vehicles when running at gross weight tend to have quite a narrow optimum range of characteristics in relation to overall length, wheel base and weight distribution.

Furthermore, the load handling system of the hook-lift type imposes additional requirements relating to the overhang of the vehicle behind the rearmost axle and the clearance available between the rearmost part of the vehicle and the payload module (e.g. flatrack or ISO container) when it is being lifted. This clearance needs to be as little as possible in order to facilitate the mechanical leverages required during lifting and so as to prevent the weight of the payload module from tending, at the beginning of the lifting operation, to lift the front of the vehicle from the ground.

Flatracks are locked to the vehicle chassis just above the centre line of the rear bogie. The locking position for an ISO container is less satisfactory, because locking has to be to the rear corner castings, and thus locking occurs at extreme rearward and lateral positions on the vehicle.

A good design of apparatus for guiding and locking the rear end of the container when being handled by a vehicle having a load handling system of the hook-lift type would ensure that, during loading, a sufficiently long length of each side rail of the container is supported so as to not to damage the container and that, during transit, the weight of the rear end of the container is supported on just its rear corner fittings rather than also by the parts of the side rails in front of the rear corner fittings. The apparatus should also be capable of being positioned so that, when the load handling system is loading a flatrack, the flatrack does not hit the container rear-end guidance and locking apparatus.

As a subsidiary need, a good design would provide an improved route for transmitting the weight of the rear end of the container to the vehicle chassis.

According to a first aspect of the present invention, there is provided apparatus for installation on a vehicle having a load handling system of the hook-lift type, for guiding an outer lower side region of a freight container during loading onto the vehicle by the load handling system and for then locking down a lower corner fitting at the rear of the outer lower side region at the completion of the loading, the apparatus comprising:
a container support member having (i) a longitudinal bed for slideably supporting the outer lower side region during the loading and (ii) a seat recessed into the longitudinal bed between front and rear sections thereof and having releasable locking means for locking down the lower corner fitting; and
a positioning device on which the container support member is pivotably mounted, the positioning device being operable to move the container support member generally horizontally from a first forward position to a second rearward position;
the arrangement being such that the apparatus provides (i) a first support mode wherein the freight container when generally horizontal sits on the container support member with the outer lower side region sitting on the front and rear sections of the longitudinal bed and (ii) a second support mode wherein the freight container when generally horizontal sits on the container support member with the lower corner fitting sitting on the seat of the container support member and locked down by the releasable locking means and with the front section of the longitudinal bed sloping downwards so as to provide a gap between the outer lower side region and the front end of the front section of the longitudinal bed;
   wherein the apparatus is adjustable from the first support mode to the second support mode by operating the positioning device to move the container support member generally horizontally from the first forward position to the second rearward position.

It may be noted that the apparatus has first and second support modes. In the first support, the outer lower side region of the freight container may be supported along a sufficiently long length by the front and rear sections of the longitudinal bed to avoid damaging the freight container during the various stages of loading onto the vehicle, right through to completion of loading at which the freight container will be generally horizontal. The second support mode may be used during transit of the freight container on the vehicle, so as to ensure that, during transit, the weight of the part of the freight container supported by the apparatus is transmitted mainly through the lower corner fitting onto the seat and releasable locking means, with the amount of the freight container weight transmitted onto the part of the longitudinal bed in front of the seat being at a comparatively low or negligible value to avoid damaging the part of the outer lower side region of the freight container in front of the lower corner fitting.

Preferably, the seat of the container support member is positioned vertically above the pivotal connection between the container support member and the positioning device. This positioning helps to ensure that the downward weight thrust onto the seat by the lower corner fitting of the freight container, in the second support mode, does not tend to cause further pivoting of the container support member that would have to be resisted in order to keep the lower corner fitting correctly bedded onto the seat. Such additional pivoting would, for example, occur if the seat of the container support member were to be positioned in front of the pivotal connection between the container support member and the positioning device.

Preferably, the container support member comprises front and rear arms which are pivotably connected together, the front arm providing the front section of the longitudinal bed and the rear arm providing the rear section of the longitudinal bed.

Preferably, the front arm also provides the seat and carries the releasable locking means, and in the second support mode the rear arm is pivotal downwards to a stowed position.

By providing the container support member as first and rear arms which are pivotal relative to one another, it is possible to pivot the rear arm to a storage position when the rear arm is not needed. For example, when the freight container is fully loaded and the apparatus is in the second support mode, the rear arm may be pivoted out the way. Also, when a flatrack is being loaded, the rear arm may be pivoted out of the way to avoid clashing with the front end of the flatrack.

In the preferred embodiment, the positioning device comprises:
a load-carrying structure which is mountable at a lower pivot point to the vehicle chassis and extends upwards therefrom to an upper pivot point providing the pivotal connection to the container support member; and
power-operated adjustment means for pivoting the load-carrying structure about the lower pivot point to move the container support member generally horizontally from the first forward position to the second rearward position.

The load-carrying structure may be positioned to be generally vertical both in the first support mode and the second support mode, so as to provide a good force transmission path of the weight of the freight container to the vehicle chassis.

Instead of simply providing first and second ones of the apparatuses on separate sides of the vehicle, it is preferable that the positioning devices of the first and second apparatuses include a common transverse member for linking together the movements of the two container support members as each moves from its first forward position to its second rearward position.

In this way, the movements of the two apparatuses between their first and second support modes may be synchronised.

In a preferred embodiment, the common transverse member forms part of the two load-carrying structures of the apparatuses so as to rigidly link together the load-carrying structures.

Preferably, for each apparatus the load-carrying structure includes (i) an inboard strut projecting downwards from the common transverse member and having at its lower end the lower pivot point and (ii) an outboard strut projecting upwards from the common transverse member and having at its upper end the upper pivot point.

The inboard struts may be connected via their lower pivot points to strong downward projections of the main longitudinal beams of the vehicle chassis. This provides a good route for transmitting the weight of the rear end of the freight container to the vehicle chassis.

Preferably, for each apparatus the power-operated adjustment means is arranged to push against the common transverse member at an inboard position.

Preferably, the combined apparatus further comprises two rollers mounted on the common transverse member for guiding rails on the underside of a flatrack during loading onto the vehicle by the load handling system. If possible, the two rollers are mounted on the common transverse member vertically above the inboard struts. This provides a good force transmission path for the weight of the flatrack when it is being carried on the two rollers so that its weight is transmitted to the vehicle chassis.

According to a second aspect of the present invention, there is provided a vehicle comprising a chassis, a load handling system of the hook-lift type mounted at a forward position on the chassis, a frame having lower pivot(s) pivotably connecting the frame to the rear end of the chassis and upper pivots at respective sides of the vehicle, the frame being pivotable from a first position in which the upper pivots are in front of the lower pivot(s) to a second position in which the upper pivots are behind the lower pivot(s), and a pair of container support members pivotably mounted on the frame at the upper pivots and each having an elongate bed which extends longitudinally of the vehicle and a seat which is slopingly recessed into the elongate bed intermediate the ends thereof and includes releasable locking means.

A non-limiting embodiment of the present invention will now be described with reference to the accompanying drawings in which:-
Fig. 1 is a side view of a vehicle having apparatus in accordance with the present invention installed thereon, during the first part of the loading phase of a flatrack;
Fig. 2 is a view similar to that of Fig. 1, but showing a later part of the loading phase of the flatrack;
Fig. 3 is a view of the vehicle of Fig 1 when loading an ISO container, at an intermediate stage of the loading operation;
Fig. 4 is a plan view of the majority of the apparatus of the invention shown in Figs. 1 - 3;
Fig. 5 is a rear view of the majority of the apparatus of the invention;
Fig. 6 is a side view of the apparatus of the invention when in a first configuration;
Fig. 7 is a side view of the apparatus of the invention when in a second configuration; and
Fig. 8 is a side view of the apparatus of the invention when in a third configuration, when carrying in transit an ISO container, a small portion of which is diagrammatically illustrated.

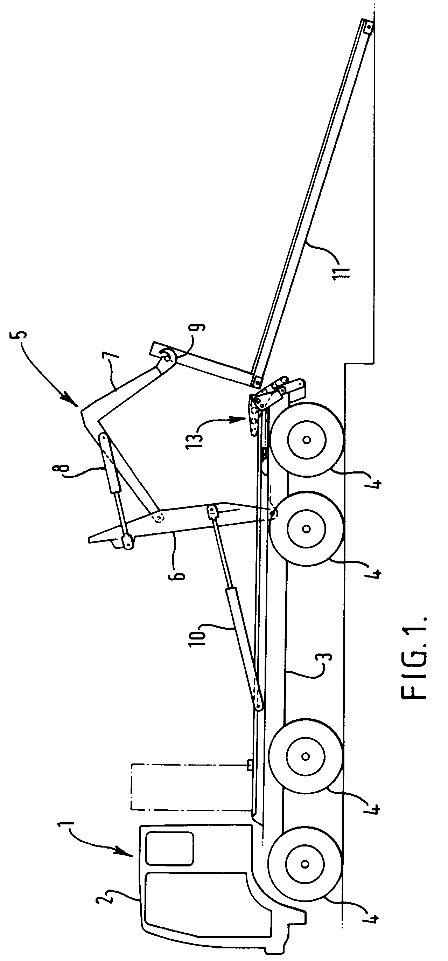

Referring to Figs. 1 - 3, a vehicle 1 has a cab 2 at the front end of a chassis 3 which includes two main longitudinal chassis girders which are positioned along the centre of the vehicle between the sets of wheels 4.

The vehicle 1 has conventional load handling system 5 of the hook-lift type. The load handling system 5 comprises a main arm 6 which is articulated onto the chassis 3 and moved by a cylinder and piston arrangement 10. A hook arm 7 is articulated onto the main arm 6 and is moved by cylinder and piston arrangement 8. A hook 9 at the end of the hook arm 7 follows two successive curved paths of movement when lifting an item onto the vehicle.

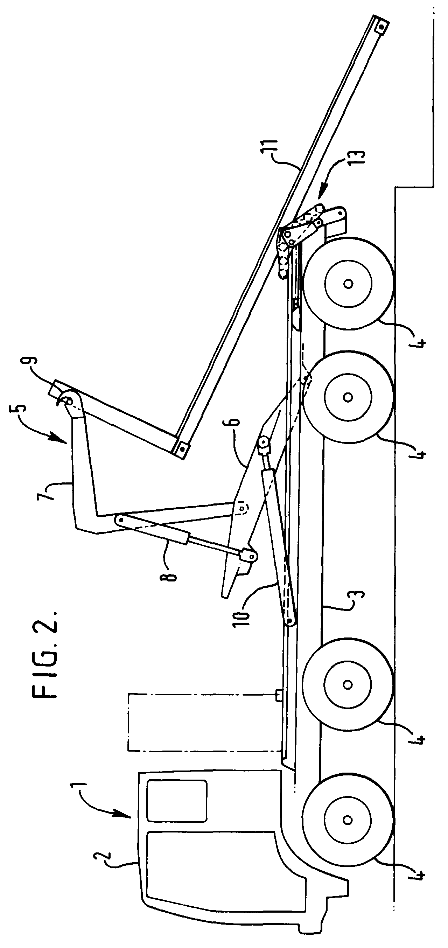

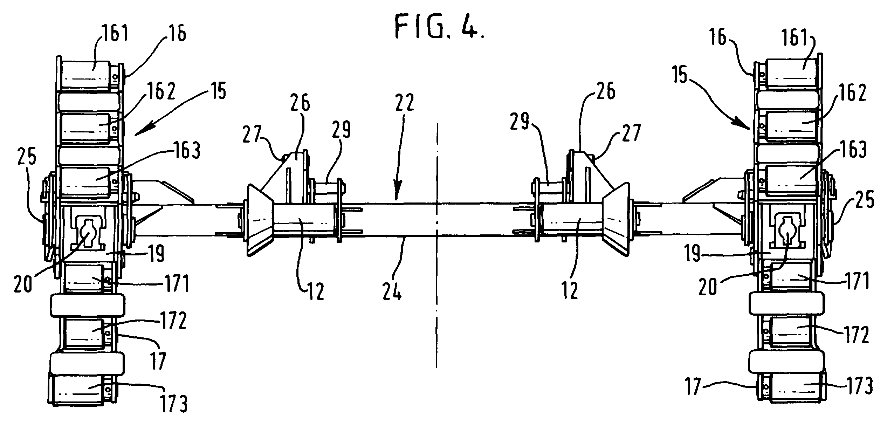

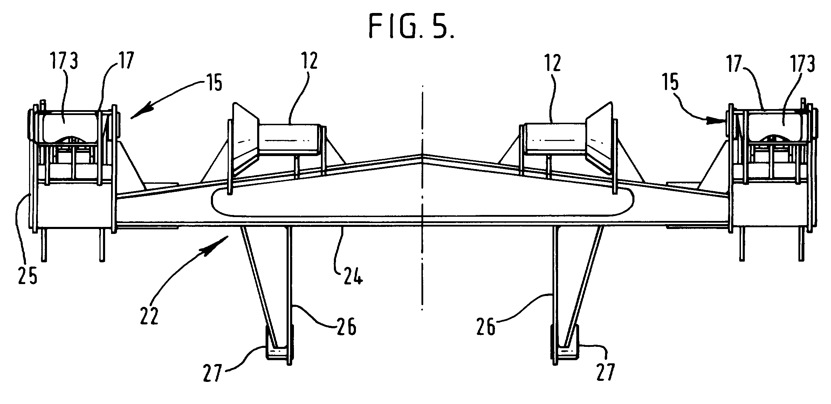

Figs. 1 and 2 show respectively an initial and an intermediate stage of lifting a flatrack 11 onto the vehicle. During the intermediate stage of loading, the central rails on the underside of the flatrack 11 rest on two inboard rollers 12 (see Figs. 4 and 5).

In Figs. 1 - 3, the embodiment of the apparatus in accordance with the present invention is illustrated generally by the reference numeral 13. In Figs. 1 and 2, it is in a stowed position so as not to clash with the front end of the flatrack 11 during loading, except to the extent that the flatrack 11 rides on the inboard rollers 12.

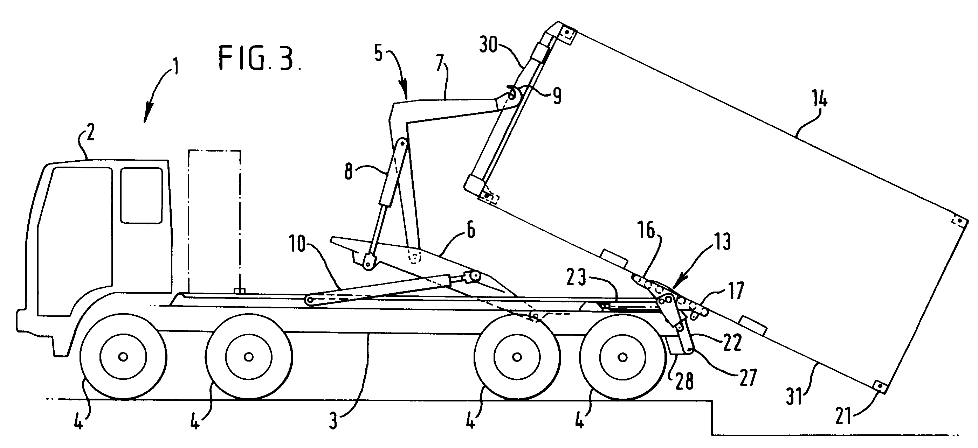

Fig. 3 shows how the apparatus 13 supports an ISO container 14 during an intermediate stage of the loading thereof. Here the apparatus 13 is in a deployed configuration.

The detail of the apparatus 13 will now be described with reference to Figs. 4 - 8.

The apparatus 13 is actually a combined apparatus comprising two separate apparatuses in accordance with the present invention, each apparatus being for a respective side of the vehicle.

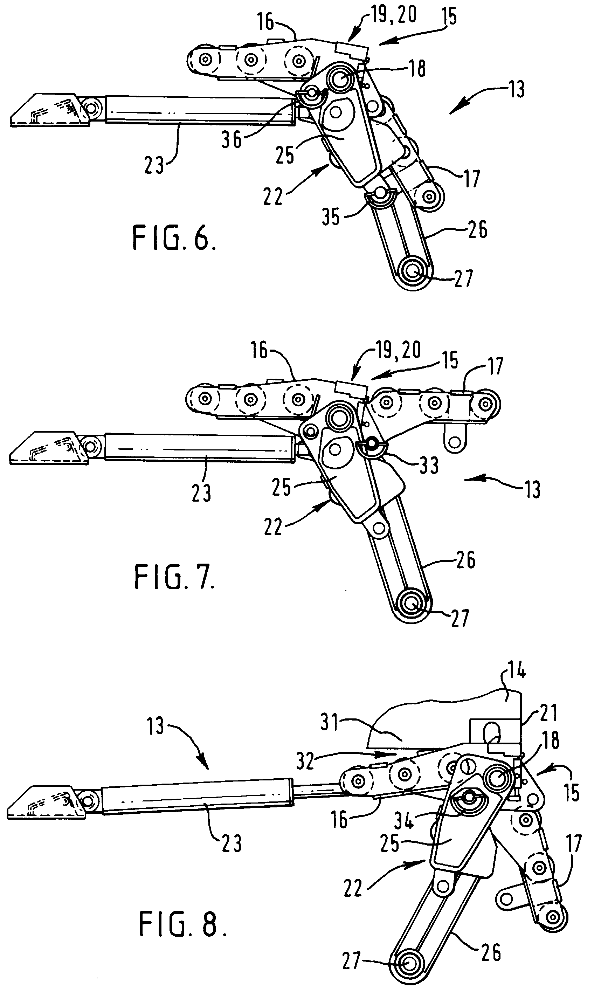

Each side of the apparatus 13 has at its top a container support member 15 comprising a front arm 16 which is pivotably connected to a rear arm 17 at an upper pivot point 18. The variety of different configurations of the arms 16, 17 of the container support member 15 may be seen in Figs. 6, 7 and 8.

The front arm 16 has a series of rollers 161, 162, 163 which define a front roller bed. The rear arm 17 has a series of rollers 171, 172, 173 which define a rear roller bed. The front arm 16 also includes a seat 19 between the rollers 163 and 171, and the seat 19 includes a conventional twistlock 20 suitable for locking onto one of the rear corner castings 21 of the ISO container 14.

Beneath the container support member 15, the apparatus 13 includes a positioning device comprising a load-carrying structure 22 (most clearly seen in Figs. 4 and 5) and power-operated adjustment means 23 (shown in Figs. 6, 7 and 8) in the form of a hydraulic piston and cylinder arrangement.

The load carrying structure 22 comprises transverse beam 24 having, at each end, outboard upwardly-projecting struts 25 which carry, at their upper ends, the container support members 15 via the upper pivot points 18. The load-carrying structure 22 also includes downwardly-projecting inboard struts 26 having lower pivot points 27 at their bottom ends. The inboard rollers 12 for supporting the flatrack 11 are mounted at inboard positions on the transverse beam 24 generally vertically above the inboard struts 26.

The apparatus 13 is pivotably mounted to the lower rear corners of downwardly-projecting chassis extensions 28 connected to the rear ends of each of the two central longitudinal chassis girders. This connection is via the lower pivot points 27.

The power-operated adjustment means 23 extend between the longitudinal chassis girders and connection points 29 on the transverse beam 24 inboard of the struts 26. The power-operated adjustment means 23 are capable of moving the container support members 15 from first forward positions (see Figs. 3, 6 and 7) to second rearward positions (see Fig. 8). In the first forward position, the upper pivot point 18 is slightly in front of the lower pivot point 27. In the second rearward position, the upper pivot point 18 is slightly behind the lower pivot point 27. However, it may be seen that the load carrying structure 22 is generally vertical at all times so that load forces applied thereto from the container support member 15 pass down generally vertically to the chassis extensions 28, via the lower pivot points 27.

When loading and unloading the flatrack 11, the container support members 15 are not needed and must be positioned out of the way of the flatrack, but also out of the way of the maximum suspension travel of the rearmost set of wheels 4. Accordingly, as shown in Figs. 1, 2 and 6, the container support members 15 are placed in their first forward positions by the power-operated adjustment means 23 during flatrack loading and unloading and flatrack transit

When the vehicle is being used with the ISO container 14, the hook 9 of the load handling system 5 is connected to the container 14 via a detachable front frame 30. The container support members 15 also need to be positioned ready to be used. Initially, the container support members 15 are positioned in their first forward positions, as shown in Figs. 3 and 7. At an early stage of the lifting operation, the side rails 31 at the outer lower side regions of the container 14 move downwards onto and then rest the full weight of the container on the container supports members 15. At this time, as shown in Fig. 7, each container support member 15 has its front and rear arm 16, 17 rigidly locked together to form a single unit so that the rollers 161 - 163 and 171 - 173 have their top points lying along a substantially flat line for providing a roller bed for supporting a respective one of the side rails 31. The seat 19 with its twistlock 20 is positioned below the top surface of the roller bed provided by the rollers 161 - 163, 171 - 173 so that there is no interference between the seat 19 with its twistlock 20 and the side rail 31.

Loading continues until the container 14 is fully loaded and is generally horizontally mounted on the vehicle 1. At this time, the front and rear arms 16, 17 are generally supporting the part of the side rail 31 in front of the rear corner casting 21, although the corner casting 21 may rest on the rearmost roller 173.

In addition to being recessed below the support surface provided by the rollers 161 - 163, 171 - 173, the seat 19 also slopes relative to the support surface provided by the rollers, so that there is step up from the rear end of the seat 19 to the roller 171 and a generally smooth upward slope of the seat blending its forward end into the roller 163.

Consequently, when the container 14 has been fully loaded, the power-operated adjustment means 23 may be activated to move the container support member 15 from its first, forward position of Fig. 7 to its second, rearward position of Fig. 8. The container 14 remains generally stationary and it is the container support member 15 that slides rearwardly underneath it. When the corner casting 21 slides off the roller 171, it drops slightly down onto the seat 19 and, because of the slope of the seat 19, causes the front arm 16 to pivot slightly anti-clockwise as viewed in Fig. 7. This creates a gap 32 between the rollers 161 - 163 and the side rail 31 so that the entire weight of the relevant rear part of the container 14 is carried by the corner casting 21 sitting on the seat 19. In this position, the twistlock 20 may then be activated to lock the corner casting 21 down onto the seat 19.

Because of the gap 32, rough cross-country transit will not cause the container 14 to bounce up and down on the container support member 15 in such as way that the relatively weak side rail 31 is damaged by impacting on the rollers 161 - 163. The corner casting 21 is deliberately specified by the ISO specification to be sufficiently strong to support the relevant rear part of the container during transit.

Whilst it is preferable that all of the rollers 161 - 163 should pivot down out of the way of the side rail 31, it may not be necessary under all conditions to totally eliminate the load transmission from the side rail 31 to the rollers 161 - 163. For example, the load transmission could be very substantially reduced to such a level as to prevent the side rail 31 from being damaged in transit, whilst still maintaining light loading between the side rail 31 and the rearmost roller 163.

In the second rearward position of the container support member 15, the rear arm 17 is not needed and it may therefore be disconnected from the front arm 16 and pivoted downwards in the clockwise direction to the position shown in Fig. 8 so as to be stowed out of the way. This pivoting is achieved by removing a locking pin 33 (see Fig. 7). The rear arm 17 may be kept in its stowed position shown in Fig. 8 by means of a locking pin 34 which locks the rear arm to the outboard strut 25.

During flatrack loading, unloading and transit, when the container support member 15 is not needed, it may be adjusted from the configuration shown in Fig. 7 to the totally stowed configuration shown in Fig. 6 by releasing the locking pin 33 to pivot the rear arm 17 clockwise down to the position shown in Fig. 6 and then locking the rear arm 17 to the outboard strut 25 with a locking pin 35. The front arm 16 is locked to the outboard strut 25 by locking pin 36.

## Claims

1. Apparatus for installation on a vehicle having a load handling system of the hook-lift type, for guiding an outer lower side region of a freight container during loading onto the vehicle by the load handling system and for then locking down a lower corner fitting at the rear of the outer lower side region at the completion of the loading, the apparatus comprising:
a container support member having (i) a longitudinal bed for slidably supporting the outer lower side region during the loading and (ii) a seat recessed into the longitudinal bed between front and rear sections thereof and having releasable locking means for locking down the lower corner fitting; and
a positioning device on which the container support member is pivotably mounted, the positioning device being operable to move the container support member generally horizontally from a first forward position to a second rearward position;
the arrangement being such that the apparatus provides (i) a first support mode wherein the freight container when generally horizontal sits on the container support member with the outer lower side region sitting on the front and rear sections of the longitudinal bed and (ii) a second support mode wherein the freight container when generally horizontal sits on the container support member with the lower corner fitting sitting on the seat of the container support member and locked down by the releasable locking means and with the front section of the longitudinal bed sloping downwards so as to provide a gap between the outer lower side region and the front end of the front section of the longitudinal bed;
wherein the apparatus is adjustable from the first support mode to the second support mode by operating the positioning device to move the container support member generally horizontally from the first forward position to the second rearward position.

2. Apparatus according to Claim 1, wherein the seat of the container support member is positioned vertically above the pivotal connection between the container support member and the positioning device.

3. Apparatus according to Claim 1 or 2, wherein the container support member comprises front and rear arms which are pivotably connected together, the front arm providing the front section of the longitudinal bed and the rear arm providing the rear section of the longitudinal bed.

4. Apparatus according to Claim 3, wherein the front arm also provides the seat and carries the releasable locking means, and in the second support mode the rear arm is pivotable downwards to a stowed position.

5. Apparatus according to any one of Claims 1 to 4, wherein the positioning device comprises:
a load-carrying structure which is mountable at a lower pivot point to the vehicle chassis and extends upwards therefrom to an upper pivot point providing the pivotal connection to the container support member; and
power-operated adjustment means for pivoting the load-carrying structure about the lower pivot point to move the container support member generally horizontally from the first forward position to the second rearward position.

6. Apparatus according to Claim 5, wherein the power-operated adjustment means is a hydraulic cylinder and piston device.

7. Combined apparatus comprising first and second apparatuses each according to any one of Claims 1 to 6, wherein the first and second apparatuses are for respective sides of the vehicle, and the positioning devices of the first and second apparatuses include a common transverse member for linking together the movements of the two container support members as each moves from its first forward position to its second rearward position.

8. Combined apparatus comprising first and second apparatuses each according to Claim 5 or 6, wherein the first and second apparatuses are for respective sides of the vehicle, and the two load-carrying structures include a common transverse member rigidly linking them together.

9. Combined apparatus according to Claim 8, wherein for each apparatus the load-carrying structure includes (i) an inboard strut projecting downwards from the common transverse member and having at its lower end the lower pivot point and (ii) an outboard strut projecting upwards from the common transverse member and having at its upper end the upper pivot point.

10. Combined apparatus according to Claim 9, wherein for each apparatus the power-operated adjustment means is arranged to push against the common transverse member at an inboard position.

11. Combined apparatus according to any one of Claims 7 to 10, further comprising two rollers mounted on the common transverse member for guiding rails on the underside of a flatrack during loading onto the vehicle by the load handling system.

12. Combined apparatus according to Claim 9 or 10, further comprising two rollers mounted on the common transverse member vertically above the inboard struts for guiding rails on the underside of a flatrack during loading onto the vehicle by the load handling system.

13. Apparatus or combined apparatus according to any one of Claims 1 to 12, wherein the or each longitudinal bed is a longitudinal roller bed.

14. Apparatus or combined apparatus according to any one of Claims 1 to 13, when installed on the rear end of a chassis of a vehicle having a load handling system of the hook-lift type.

15. A vehicle comprising a chassis, a load handling system of the hook-lift type mounted at a forward position on the chassis, a frame having lower pivot(s) pivotably connecting the frame to the rear end of the chassis and upper pivots at respective sides of the vehicle, the frame being pivotable from a first position in which the upper pivots are in front of the lower pivot(s) to a second position in which the upper pivots are behind the lower pivot(s), and a pair of container support members pivotably mounted on the frame at the upper pivots and each having an elongate bed which extends longitudinally of the vehicle and a seat which is slopingly recessed into the elongate bed intermediate the ends thereof and includes releasable locking means.

16. The frame and container support members of Claim 15.
